# EUROPEAN PATENT SPECIFICATION

(11) **EP 4 023 354 B1**
(45) Date of publication and mention of the grant of the patent: **19.07.2023**
(21) Application number: 20889650.6
(22) Date of filing: 27.10.2020
(51) Int. Cl.: B21C 37/04, C21D 9/52

(54) **PREPARATION METHOD FOR COATED ALLOY WIRE**
VERFAHREN ZUR HERSTELLUNG EINES BESCHICHTETEN LEGIERUNGSDRAHTES
PROCÉDÉ DE PRÉPARATION POUR FIL D'ALLIAGE REVÊTU

(30) Priority: 19.11.2019 CN 201911136518; 06.08.2020 CN 202010787499
(43) Date of publication of application: 06.07.2022
(73) Proprietor: Jiangsu Zhongtian Technology Co., Ltd., Nantong, Jiangsu 226000 (CN); Zhongtian Power Optical Cable Co., Ltd., Nantong, Jiangsu 226000 (CN)
(72) Inventor: WANG, Wenhui, Nantong, Jiangsu 226000 (CN); LI, Facai, Nantong, Jiangsu 226000 (CN); DAI, Zhicheng, Nantong, Jiangsu 226000 (CN); WU, Mingnian, Nantong, Jiangsu 226000 (CN); GUO, Chenxuan, Nantong, Jiangsu 226000 (CN); HE, Cangping, Nantong, Jiangsu 226000 (CN); XIE, Shuhong, Nantong, Jiangsu 226000 (CN); XUE, Jiping, Nantong, Jiangsu 226000 (CN)
(74) Representative: Boult Wade Tennant LLP
(86) International application number: PCT/CN2020/123972
(87) International publication number: WO 2021/098451

(56) References cited:
- CN-A- 1 944 692
- CN-A- 102 751 046
- CN-A- 106 653 154
- CN-A- 107 254 568
- CN-A- 108 930 044
- CN-A- 108 986 989
- CN-A- 109 647 924
- CN-A- 110 125 211
- CN-A- 110 125 211
- CN-A- 111 687 236
- CN-B- 106 755 836
- IT-A1- MO20 110 271
- JP-A- 2010 024 489
- US-A- 3 854 193
- US-A- 4 688 411
- US-A1- 2017 226 615

## Description

### TECHNICAL FIELD

The present application relates to the technical field of metal manufacturing, and in particular, to a preparation method of a coated alloy wire.

### BACKGROUND

Aluminum-coated steel wire for electrical use, especially aluminum-coated invar steel wire, is a bimetallic material composed of alloy steel wire rod and aluminum rod based on continuous extrusion coating technology, and has the characteristics of such as high strength, corrosion resistance, and low linear expansion coefficient, and thus is widely used in double-capacity overhead transmission and distribution lines. With the further improvement of span and power transmission capacity of the transmission and distribution lines, higher requirements are put forward for tensile strength and elongation of the aluminum-coated invar steel wire. The improvement of the tensile strength of the existing aluminum-coated invar steel wire is mainly through the adjustment of the chemical composition system of the wire rod and the subsequent cold processing hardening. The adjustment of the chemical composition of the wire rod, especially the adjustment of V, Cr, Mo and other elements, results in the production of large-sized carbide particles in non-dispersion distribution, and affects the wire rod's wire performance and wire breakage occurs easily during the drawing process. The subsequent cold processing hardening with high compressibility can effectively improve the tensile strength of the aluminum-coated invar steel wire, but brings about a sharp drop in the elongation of the aluminum-coated invar steel wire, which restricts the preparation and application of the double-capacity wire.

At present, the invar steel wire is mainly heat treated in a pit furnace and cover furnace, directly followed by aluminum coating and bimetallic continuous drawing process. In this way, the material has poor wire performance, and the carbide particles have too large size and uneven distribution, easily causing wire breakage during the drawing process, and the final aluminum-coated invar steel wire has low tensile strength and elongation.

CN 110125211A provides a method for producing a large elongation aluminum-clad steel wire, which adopts an induction heating aging treatment process, including the following steps: 1) Descaling the high carbon hot rolled wire rod and drawing it into a wire having a wire diameter required for the process design; 2) The austenitic steel wire is austenitized and subjected to isothermal transformation through a lead bath to obtain a steel wire having a sorbite structure; 3) The steel wire having the sorbite structure is subjected to on-line pickling to remove lead slag and scale on the surface layer to obtain a surface-cleaned steel wire; 4) The continuous extrusion coating process is adopted to uniformly coat the aluminum layer on the surface of the cleaned steel wire to obtain a coated blank; 5) The coated blank is drawn and deformed to form an aluminum-clad steel wire; 6) The cold-drawn aluminum-clad steel wire is aged by an induction heater.

US 2017/226615A1 provides a method for producing an aluminum wire that has high strength and high conductivity even when reduced in diameter while having excellent elongation and improved in productivity.

CN 106755836B provides a preparation process of a stainless steel wire having a small production line, high quality of production products and high wire take-up efficiency.

JP 2010024489A relates to a coated Fe-Ni alloy wire having high strength, a low coefficient of thermal expansion, and excellent twist characteristics.

CN 106653154 A relates to the technical field of wire and cable conductors, and more particularly to a high strength aluminum clad steel wire and a method for producing the same.

CN 108930044A relates a processing method for a bead wire, which consists of the following steps: (1) surface treatment; (2) first drawing; (3) heat treatment; (4) second drawing; (5) copper plating.

US 4688411A relates to a continuous drawing method for cold forging wires, in which wires (including steel bars) are subjected to descaling, lubrication pre-treatment, lubrication and drawing while moving continuously.

CN109647924A provides a before-drawing pre-treatment process for a steel wire with a circular cross section. The before-drawing pre-treatment process comprises the steps that steel wire rod unwindingis carried out, a steel wire rod is mechanically peeled through a mechanical peeling machine, the steel wire rod obtained after mechanical peeling is subjected to rust removal with an abrasive belt polishing device, and the steel wire rod subjected to abrasive belt polishing is subjected to hot water washing and boron coating; the steel wire rod subjected to boron coating is subjected to hot airdrying; and the dried steel wire rod is subjected to powdered lubricant coating to enter a wire drawing machine for wire drawing, and winding after wire drawing is carried out.

ITMO20110271A1 provides a planetary brushing machine capable of improving the prior art in at least one of the above aspects.

### SUMMARY

The invention is as defined in claim set. In view of the above, it is necessary to provide an improved preparation method of a coated alloy wire.

A technical solution provided by the present application is: a preparation method of a coated alloy wire according to claim 1 and including the following steps:
S1: performing continuous heat treatment on an alloy wire rod to obtain a continuously heat-treated alloy wire rod, and then performing surface treatment on the continuously heat-treated alloy wire rod to obtain an alloy core;
S2: continuously extruding a coating metal layer onto a surface of the alloy core to form a coated wire;
S3: performing bimetallic synchronous drawing on the coated wire to prepare the coated alloy wire.

Where in the step S1, the continuous heat treatment has a heating temperature of 680-820°C and a wire-feeding speed of 1.5-5m/min, and the alloy wire rod includes invar steel wire rod or iron-nickel alloy wire rod.

Further, in the step S1, the continuous heat treatment process is controlled so that the continuously heat-treated alloy wire rod obtained has one or more of the following properties: strength ≥ 1000MPa, elongation ≥ 10%, carbide size ≤ 6µm, and wire strength difference ≤20MPa.

Further, in the step S1, the continuous heat treatment is performed using a natural gas continuous heat treatment furnace, and the alloy wire rod is in a protective atmosphere of inert gas during the heating process.

Further, in the step S1, the surface treatment includes polishing or grinding the continuously heat-treated alloy wire rod.

Further, the polishing is online abrasive band polishing. Further, in the online abrasive band polishing, the abrasive band is selected to be 60-120 mesh, and rotation coefficient of the abrasive band is 0.4-0.9.

Further, the grinding is carried out by a louvered wheel.

Further, the step S1 further includes rinsing the alloy wire rod after the surface treatment to obtain an alloy core. Further, the rinsing is performed using adjustable high-pressure water. Further, the water pressure of the adjustable high-pressure water is 5-20 MPa.

Further, before the step S2, it further includes performing a preheat treatment on the alloy core. Further, the preheat treatment is performed using an induction heating device.

Further, in the step S2, a material of the metal layer includes aluminum or an aluminum alloy.

Further, in the step S2, a pulling speed of the alloy core is 80-140 m/min.

Further, in the step S2, a coating temperature of a mold cavity is 400-550°C.

Further, in the step S3, in the drawing process, a pressure gap is 0.1-0.5 mm and a length of a pressure mold is 60-140 mm.

Further, in the step S3, a taper angle of a wire drawing mold is 5-9°.

Further, in the step S3, an average pass compression ratio is controlled at 14%-21%, and the drawing speed is 3-6m /s, and the wire temperature is controlled within 130°C, and the drawing is performed for 5-10 passes.

Further, in the step S3, a solid lubricant or a liquid lubricant is used in the drawing process. Further, the solid lubricant includes one or more of calcium stearate, sodium stearate and barium stearate, and the liquid lubricant mainly includes mineral oil and/or vegetable oil.

Compared with the existing technology, the preparation method of a coated alloy wire provided by the present application uses a continuous heat treatment furnace to obtain the alloy wire rod with well-matched strength and elongation, and combines with surface treatment to improve the bonding force between the alloy core and the coated material, and finally uses the bimetallic synchronous drawing to improve the elongation of the coated alloy wire and reduce the hardness difference in the cross section of the coated alloy wire.

### BRIEF DESCRIPTION OF DRAWINGS

Hereafter, the present application will be further illustrated in detail with reference to the accompanying drawings and specific examples.
FIG. 1 is a preparation flow chart of a coated alloy wire in an embodiment of the present application;
FIG. 2 is a SEM diagram (magnification of 2000X) of an invar steel core material obtained after continuous heat treatment in Example 1 of the present application;
FIG. 3 is a metallographic image (magnification of 500X) of an invar steel core material obtained after continuous heat treatment in Example 1 of the present application;
FIG. 4 is a SEM diagram (magnification of 2000X) of an invar steel core material obtained after off-line heat treatment in Comparative Example 3 of the present application;
FIG. 5 is a metallographic image (magnification of 500X) of an invar steel core material obtained after off-line heat treatment in Comparative Example 3 of the present application.

### DETAILED DESCRIPTION OF EMBODIMENTS

In order to more clearly understand the above obj ects, features and advantages of the examples of the present application, the present application will be described below in detail with reference to the accompanying drawings and specific examples. It should be noted that the features in the examples of the present application may be combined with each other without departing from the scope of the appended claims.

In this article, "wire performance" generally refers to that magnitude and direction of the residual stress generated by the material during the wire drawing process have uneven distribution on the cross section, causing the wire to be wavy, and affecting stability of an outer diameter and an initial tensile force of the product; and it is generally to detect a axial value when detecting the material.

The "pull-weight ratio" herein refers to a ratio of breaking force to unit-length mass.

Unless otherwise defined, all technical and scientific terms used herein have the same meaning as commonly understood by those skilled in the technical field of the examples of the present application. The terms used in the specification of the present application herein are only for the purpose of describing specific examples, and are not intended to limit the examples of the present application.

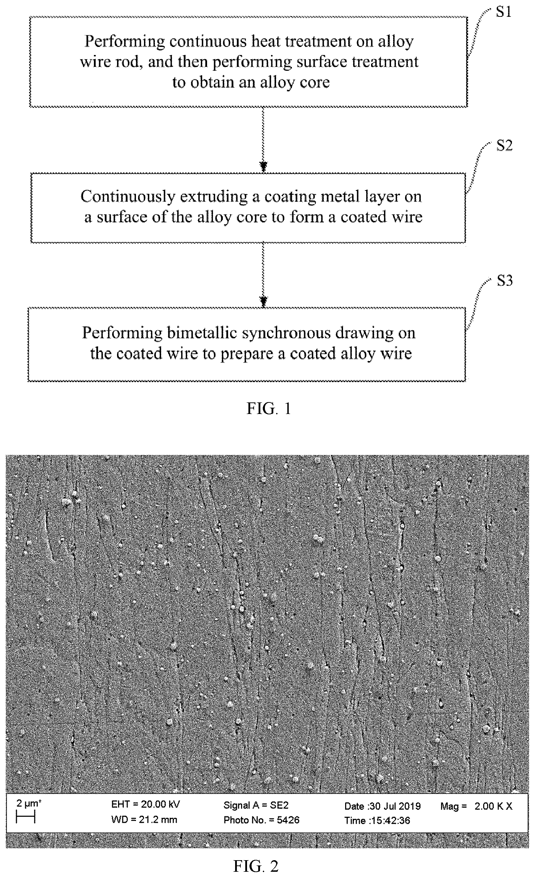

Referring to FIG. 1, the present application relates to a preparation method of a coated alloy wire, including the following steps:
Step S1: performing continuous heat treatment on an alloy wire rod to obtain a continuously heat-treated alloy wire rod, and then performing surface treatment on the continuously heat-treated alloy wire rod to obtain an alloy core; where the continuous heat treatment has a heating temperature of 680-820°C and a wire-feeding speed of 1.5-5m/min, and the alloy wire rod includes invar steel wire rod or iron-nickel alloy wire rod.

The main constituents of the existing invar steel wire rod or iron-nickel alloy wire rod are Ni, Mo, V, Cr, C and other main chemical elements, and the organization, tensile strength and linear expansion coefficient of invar steel or iron-nickel alloy materials can be optimized by adjusting ratios between chemical constituents. In general invar steel wire rod or iron-nickel alloy wire rod (such as 4J36, 4J38, etc.), a mass fraction of V element ranges from 0.4% to 1.2%, a mass fraction of Mo element ranges from 0.5% to 2.8%, and a mass fraction of Cr element is less than or equal to 0.8%. Where Mo element improves the alloy strength mainly through solid solution strengthening, and V and Cr elements improve the alloy strength mainly through precipitation strengthening.

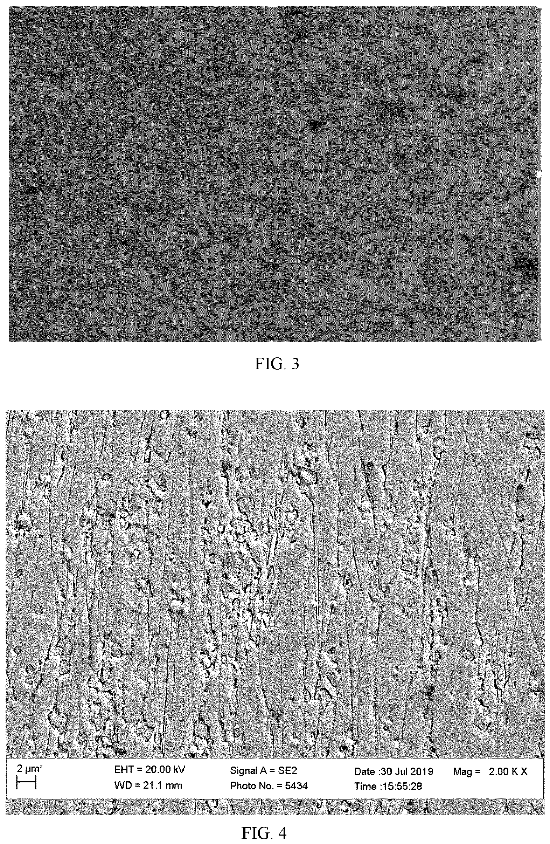

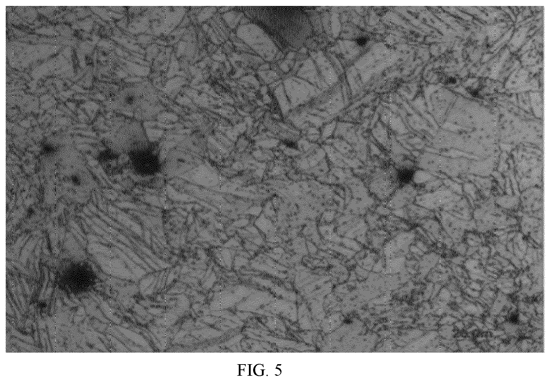

The existing heat treatment methods for invar steel or iron-nickel alloy wire rod are mainly carried out by tempering for 3-9 hours using off-line heating furnaces such as cover furnaces, pit furnaces, and box furnaces, etc. Generally, the off-line heat treatment technology is carried out by stacking multiple rolls of wires to be treated together. After heat treatment, strength difference in the same circle of the material is 40MPa or more, and the strength difference in different layers of wire rod is 70MPa or more. Through metallographic analysis (e.g., FIG. 5) or SEM scanning analysis (e.g., FIG. 4), it was found that the microstructural carbides such as MoC, VC, Cr₃C₂ showed a cluster-like distribution with a particle diameter reaching micron scale. This is due to the fact that as the heat treatment temperature increases and the holding time increases, the precipitated carbide particles grow up, and the carbide particles gradually show a cluster-like distribution with a particle size reaching the micron scale.

In order to solve the above problems existing in the existing technology, the present application adopts a continuous heat treatment process to heat treat the alloy wire rod, so as to avoid the disadvantage of poor wire performance of the material caused by heat treatment using a pit furnace or a cover furnace etc.; and the continuous treatment is beneficial to control of the size of the carbide particles and uniform distribution of the carbide particles, avoiding the disadvantage of uneven reaction when the whole wire rod is put into the heat treatment furnace for heating.

In the present application, "continuous heat treatment" refers to a heat treatment technique in which the alloy wire rod to be treated is unfolded successively to be heat treated, including unfolding the alloy wire rod to be treated, followed by treating alloy wire rod by a wire-releasing device, a heating furnace device, a cooling device, and a wire-winding device, where the wire-releasing device and the wire-winding device may be active or passive, and the wire-feeding speed is adjusted by a traction motor and PLC control program, and the furnace cavity temperature of the heating furnace is automatically controlled by PID.

In the present application, the continuous heat treatment technology is used to heat the wire rod unfolded successively, so as to avoid coiling and stacking of the alloy wire rod during the heat treatment process, realize rapid heating and rapid cooling of the wire rod, and inhibit the tendency of carbide particles to grow after precipitation and the carbide particles are distributed in a diffuse manner with the particle size reaching nanoscale.

At the same time, this application further defines the heating temperature of continuous heat treatment is controlled to be 680-820°C, and the wire-feeding speed is controlled to be 1.5-5m/min, and in the process, the heating temperature and the wire-feeding speed are a set of parameters that cooperate with each other; a ratio of the heating temperature and the wire-feeding speed can ensure that an actual wire temperature of the wire rod exceeds the recrystallization temperature, thereby ensuring the recrystallization effect of the wire rod. If the heating temperature is too high or the wire-feeding speed is too fast, the recrystallization effect of the wire rod will become poor, the tensile strength will drop greatly, the carbide particles will become larger, the decarburization will be aggravated, and the frequency of wire interruption in subsequent production is increased by one time or more; if the heating temperature is too low or the wire-feeding speed is too slow, the recrystallization effect of the alloy will be not good, and the good match between strength and elongation cannot be achieved.

By controlling the parameters within the above range, the continuous heat treatment is performed to obtain the invar steel wire rod, which have a wire strength difference of no more than 20MPa, an elongation of ≥10%, and good performance uniformity after heat treatment. Through metallographic analysis (as shown in FIG. 3) or SEM scanning analysis (as shown in FIG. 2), it was found that the microstructural carbides, such as MoC, VC, Cr₃C₂, showed a dispersive distribution, and the particle diameter reaches nanometer scale.

Further, in the step S1, the continuous heat treatment process is controlled so that the alloy wire rod obtained after continuous heat treatment has strength of ≥ 1000MPa, elongation of ≥ 10%, carbide size of ≤ 6 µm, and wire strength difference of ≤ 20MPa, which are also properties of alloy core after continuous heat treatment.

More specifically, the continuous heat treatment can be performed in a natural gas continuous heat treatment furnace, and in the heating process, the alloy wire rod is in a protective atmosphere of an inert gas, such as nitrogen, argon, and the use of the protective atmosphere can prevent oxidative decarburization.

Due to the influence of heat treatment and dust and bruise at the production site, the implementation of this step further includes a subsequent surface treatment process, which is mainly used to remove the attachments on the surface of the continuously heat-treated alloy wire rod, and improve the surface flatness and surface energy of the alloy wire rod, so that the surface has better coatability to improve the bonding force with the metal layer.

The surface treatment includes performing online abrasive band polishing or louvered wheel grinding on the continuously heat-treated alloy wire rod to improve the grinding quality by adjusting the mesh number of the abrasive band and the rotation coefficient of the abrasive band so as to achieve a better coating effect. After online grinding, clear grinding lines can be seen under microscopic magnification of 100 times, and can increase alloy-aluminum interfacial tension in the subsequent process, so as to improve the bonding force of the coated alloy through indirect metallurgical bonding. Where the mesh number of the abrasive band and rotation coefficient of the abrasive band are a pair of matching parameters. In the online abrasive band polishing of the present application, the abrasive band is selected to be 60-120 mesh, and the rotation coefficient of the abrasive band is 0.4-0.9. If the mesh of the abrasive band is less than 60 mesh or the grinding rotation coefficient exceeds 0.9, the surface of the core layer material will be severely polished and thus microscopic defects appear, which causes crack sources to form easily at the microscopic defects during the subsequent bimetallic drawing and as drawing proceeds, the stress concentration causes wire breakage. If the mesh number of the abrasive band is higher than 120 mesh or the grinding rotation coefficient is lower than 0.4, the defects on the surface of the core layer material cannot be completely polished to be clean so that the steel is easily exposed during the coating process, resulting in interruption of coating and wire drawing production and reducing the product qualification rate.

Further, step S 1 further includes performing a rinsing treatment on the surface-treated alloy wire rod to obtain an alloy core, and the rinsing treatment is carried out with adjustable high-pressure water to rinse, and for example, the water pressure is 5-20 MPa. Through the above step of the rinsing treatment, the metal powder remaining on the surface of the surface-treated alloy wire rod can be removed, and edges and corners can be passivated and polished.

The surface treatment method adopted in the present application is more environmentally friendly than traditional pickling, and has high treatment efficiency. In order to further improve the rinsing effect, the high-pressure water rinsing equipment can also be equipped with circulation and filtering equipment, and an annular air-blowing equipment.

Step S2: continuously extruding a coating metal layer onto the surface of the alloy core to form a coated wire.

In a specific example, in step S2, the material of the metal layer includes aluminum or aluminum alloy.

In the present application, the process principle of continuous extrusion coating is that single or two aluminum rods enter an extrusion mold cavity along the extrusion wheel groove by the traction and friction force generated by the rotation of the wheel, and the aluminum rods form a semi-molten state in the mold cavity by the heat generated via the temperature and friction of the mold cavity itself, and meanwhile the aluminum rods are compounded with the core material through two sides of the core material under the action of extrusion force and traction force and then are extruded out of the mold hole together to form a coated product. In this process, parameters such as pulling speed, extrusion wheel speed, and mold cavity coating temperature are all key process parameters in the continuous extrusion coating process, which directly affect the bonding strength between the alloy core and the metal layer material.

In the present application, the pulling speed of the alloy core is 80-140 m/min, and the mold cavity coating temperature is 400-550 °C, where the speed of the continuous extrusion coating is mainly determined by reasonable matching between the extrusion wheel speed and the core layer pulling speed; too fast pulling speed is not conducive to the bonding force between the alloy core and the coating layer, causing the problems such as leakage; if the pulling speed is too slow, the pressure inside the mold cavity will be too large and if the speed of the core material layer is relative small, then the leakage of aluminum will be relative large, and the increased extrusion force will result in wire breakage and damage to the process device in severe cases. At the same time, the huge heat generated by friction during continuous extrusion coating will also cause the temperature of the mold cavity to increase sharply, and thus the temperature of the mold cavity should be controlled during the production process. If the temperature is too high, it will cause thermal expansion of the process device and change size of the relevant gap, which will not only affect the quality of coating, but also aggravate the wear of the process device. If the temperature is too low, the fluidity of the coating metal will become poor, and the pressure in the mold cavity will be too large, which is likely to cause omission of coating or damage to the process mold. Production practice has proved that it is appropriate that the control temperature of the mold cavity is at 400-550 ° C.

In order to further improve the bonding force of the double-layer material and improve the coating efficiency, an induction heating device can be used to perform a preheat treatment on the alloy core before the continuous extrusion and coating, so that the temperature of the coating material is close to the temperature of the core material, to reduce the heat loss inside the mold cavity, improve extrusion and coating efficiency, and reduce coating omission; where in the coating process, for example, inert gas such as nitrogen or argon can be used to perform protection so as to prevent oxidation of the alloy core.

Step S3: performing bimetallic synchronous drawing on the coated wire to prepare the coated alloy wire.

Due to the large difference in the elongation coefficient and yield strength of the core layer metal and the outer layer metal of the coated alloy material, in order to achieve synchronous deformation of the two metals in the drawing, a hydrodynamic lubrication technology or a pressure mold technology is generally used, that is, a combined installation of a pressure mold and a drawing mold, as well as a lubricating medium such as solid, liquid or grease are used for wrapping and lubrication. Therefore, the indexes such as design of pass compression ratio, gap of pressure mold (i.e., pressure gap), length, taper angle of drawing mold, length of sizing belt, drawing speed and cooling have become key process parameters for synchronous drawing of bimetallic materials.

Specifically, in a specific example of the present application, the drawing metal continuously brings the lubricating medium in from the pressure mold and the wire drawing mold under the action of traction tension using the calcium (sodium) stearate or similar solid lubricant (such as barium stearate) and using hydrodynamic lubrication and pressure mold technology; with the increase of the lubricating medium, the pressure along the depth direction of the mold becomes larger and larger and exceeds the yield strength of the core layer material; under the action of pressure and drawing force, the bimetallic material gradually realizes diameter reduction. Preferably, 5-10 passes of bimetallic synchronous drawing are performed in the present application.

Specifically, the solid lubricant may be barium stearate, or other equivalent lubricants commonly used in the field; or a liquid lubricant can be used after adjusting the mold gap and angle, and the liquid lubricant mainly includes mineral oil and/or vegetable oil.

In order to further improve the tensile strength of the coated alloy wire and control the elongation of the coated alloy wire, preferably the pressure gap is 0.1-0.5mm and the length of the pressure mold is 60-140mm; and/or the taper angle of the wire drawing mold is 5-9°; and/or the average pass compression ratio is controlled at 14%-21%, the drawing speed is 3-6m/s, and the wire temperature is controlled within 130°C.

The pressure mold gap and the pressure mold length are important control parameters for controlling the deformation pressure; when the pressure mold becomes shorter, the pressure mold gap needs to be reduced simultaneously in order to achieve a certain deformation pressure. Practice has proven that the pressure mold gap for the coated invar steel wire is 0.1-0.5mm, and the length of the pressure mold is 60-140mm. when beyond this range, the pressure at the pressure mold and the wire drawing mold is too low to cause the coated invar steel wire to deform synchronously, producing the phenomenon of wire breakage and alloy-aluminum detachment.

The deformation taper angle of the wire drawing mold and the size of the sizing belt are ones of the important parameters in the drawing deformation; practice has proven that if the taper angle of the wire drawing mold is less than 5°, the fluidity difference and the hardness difference between the center part and the surface metal during the deformation process of the coated metal are too large, with the elongation being less than 1.0% and microcracks being likely to occur; and if the taper angle of the wire drawing mold exceeds 9°, the size of the mold sizing belt will be shortened, and the wire diameter of the finished product will easily be out of tolerance; and although the tensile strength of the finished product is improved, the elongation will drop to 0.8% or less. For example, when the coated alloy with ϕ4.22 is drawn with a taper angle of 10° and a sizing belt length of 50% to ϕ3.83, ϕ3.49, ϕ3.2, ϕ2.96, and ϕ2.74, the elongations of passes are 1.4%, 1.1%, 1.0%, 0.8%, and 0.6%, which does not meet the technical requirements.

The wire temperature is one of the key control indexes during continuous drawing, and the wire temperature gradually increases with the increase of the single pass compression ratio and the increase of the drawing speed. Generally, during continuous drawing, it is necessary to cool down at the drawing mold and the winding drum. During the continuous drawing process, if the wire temperature exceeds 150°C and lasts for 20s or more, the material will experience strain aging embrittlement, the tensile strength of the wire increases, the elongation and torsion index drop rapidly, and the wire breaks frequently during bending and stranding. Practice has proven that when the pass compression ratio is 14%-21%, and the drawing speed is 3-6m/s, and the wire temperature is controlled within 130 °C in the drawing of the coated invar steel wire, the tensile strength, elongation, torsion and other indexes of the wire reach the best.

By adjusting the bimetallic drawing process, the taper angle of the drawing mold is optimized, the tensile strength of the aluminum-coated invar steel wire is improved, the elongation of the aluminum-coated invar steel wire is improved, and the hardness difference of the invar steel section is reduced. The final finished coated alloy wire thus obtained has tensile strength of ≥ 1200 MPa, and elongation of ≥ 1.2%.

Further, the sequence of the above steps S1, S2 and S3 cannot be reversed.

In the present application, the sequence of steps S1, S2, and S3 cannot be reversed, and must be continuous heat treatment, continuous extrusion coating, and continuous bimetallic synchronous drawing.

If the sequence of S1 and S3 is exchanged, then the aluminum-coated invar steel wire is annealed at 130°C-550°C and with a holding time for 1-7h, the results show that the phenomenon of steel-aluminum delamination is prone to occur when the wire is twisted with a temperature above 460°C for 7h; when the temperature exceeds 530° h, the aluminum layer in the local area of the wire falls off and deforms; when the temperature is lower than 400°C, the aging elongation does not change within 5h; the aging elongation is unstable between 5-7h at 450-460°C. And the aging is only used to complete removal of the stress, and does not significantly change the elongation of the wire, which is mainly because that the core layer alloy has relatively high recrystallization temperature, and when using annealing test after core layer coating and drawing, outer layer material has softened or melt before the core layer reaches the recrystallization state or the structure of coated alloy wire is directly damaged.

If the sequence of S1 and S2 is exchanged, i.e., without annealing at a pressure for extrusion deformation, then this causes the test result is similar to that obtained after the sequence of S1 and S3 is exchanged, and S3 cannot be drawn.

The features and performances of the present invention will be further described in detail below in combination with the examples.

Unless otherwise specified, the operations and processing methods involved in the present application belong to conventional methods in the field.

Unless otherwise specified, the instruments used in the present application are conventional instruments in the field.

The detection method involved in the specific examples of the present application is as follows:
SEM test uses thermal-field emission scanning electron microscope UITRA55, with EHT (extra high tension ) of 20KV, a WD (work distance) of 21.2mm and a magnification of 2000 times; and
The metallographic test uses a metallographic microscope M2m with a magnification of 500 times.

### Example 1

Invar steel wire rod with a diameter of 4.0mm experienced successively online treatment in a natural gas continuous heat treatment furnace, polishing treatment using an online abrasive band and rinsing using an online high-pressure water of 5MPa, to obtain an invar steel core material, where the heating temperature of the heat treatment furnace was 700°C, the wire-feeding speed of the invar steel wire rod was 3.6m/min, the treated invar steel wire rod had a strength of 1120MPa and an elongation of 12.2%; the mesh number of the abrasive band was 120, and the rotation coefficient of the abrasive band was 0.6. As shown in FIG. 2 and FIG. 3, after the continuous heat treatment in this example, the microstructural carbides MoC, VC and Cr₃C₂, etc. in the invar steel core material showed a diffuse distribution, with the particle diameter reached nanometer scale.

A uniformly coated aluminum layer was formed on the surface of the invar steel core material by continuous extrusion coating technology, forming the coated wire. Where the coating temperature was 420° C, the coating speed was 130 m/min, and the diameter of the coated wire was 4.50 mm.

The bimetallic synchronous drawing was performed for 6 passes on the coated wire by using calcium stearate as lubricant, where the average pass compression ratio was 17.8%, the pressure gap was 0.2mm, the mold length was 100mm, and the drawing speed was 5m/ s, the wire temperature was controlled at 108 °C, and finally an aluminum-coated invar steel wire with a diameter of 2.5 mm was formed, with a total compression rate of 69.1%. The formed aluminum-coated invar steel wire had a tensile strength of 1280MPa, an elongation of 1.2%, and a torsion of 95 turns.

### Example 2

4J36 iron-nickel alloy wire rod with a diameter of 4.4mm experienced successively online treatment in a natural gas continuous heat treatment furnace, polishing treatment using an online abrasive band and rinsing using an online high-pressure water of 10MPa, to obtain iron-nickel alloy core, where the heating temperature of the heat treatment furnace was 720 °C, the wire-feeding speed of the iron-nickel alloy wire rod was 3.3m/min, the treated iron-nickel alloy wire rod had a strength of 1100MPa and an elongation of 11.4%; and the mesh number of the abrasive band was 120, and the rotation coefficient of the abrasive band was 0.7.

A uniformly coated aluminum-alloy layer was formed on the surface of the iron-nickel alloy core by continuous extrusion coating technology, forming a coated wire, where the coating temperature was 430° C, the coating speed was 130 m/min, and the diameter of the coated wire was 4.95 mm.

The bimetallic synchronous drawing was performed for 6 passes on the coated wire using sodium stearate as lubricant, where the average pass compression ratio was 17.3%, the pressure gap was 0.3mm, the mold length was 110mm, and the drawing speed was 5m/s, the wire temperature was controlled at 113 °C, and finally an aluminum-alloy-coated iron-nickel alloy wire with a diameter of 2.8 mm was formed, with a total compression rate of 68.0%. The formed aluminum-alloy-coated iron-nickel alloy wire had a tensile strength of 1260 MPa, an elongation of 1.2%, and a torsion of 87 turns.

### Example 3

Invar steel wire rod with a diameter of 5.3mm experienced successively online treatment in a natural gas continuous heat treatment furnace, polishing treatment using an online abrasive band and rinsing using an online high-pressure water of 15MPa, to obtain an invar steel wire, where the heating temperature of the heat treatment furnace was 760° C, the wire-feeding speed of the invar steel wire rod was 2.7m/min, the treated invar steel wire rod had a strength of 1050MPa and an elongation of 11.0%; and the mesh number of the abrasive band was 80, and the rotation coefficient of the abrasive band was 0.8.

A uniformly coated aluminum layer was formed on the surface of the invar steel core by continuous extrusion coating technology, forming a coated wire, where the coating temperature was 440° C, the coating speed was 110 m/min, and the diameter of the coated wire was 5.98 mm.

The bimetallic synchronous drawing was performed for 8 passes on the coated wire using calcium stearate as lubricant, where the average pass compression ratio was 17.1%, the pressure gap was 0.35mm, the mold length was 120mm, and the drawing speed was 4m/s, the wire temperature was controlled at 118 °C, and finally an aluminum-coated invar steel wire with a diameter of 3.1 mm was formed, with a total compression rate of 73.1%. The formed aluminum-coated invar steel wire had a tensile strength of 1235MPa, an elongation of 1.5%, and a torsion of 92 turns.

### Example 4

4J38 iron-nickel alloy wire rod with a diameter of 5.8mm experienced successively online treatment in a natural gas continuous heat treatment furnace, polishing treatment using an online abrasive band and rinsing using an online high-pressure water of 20MPa to obtain an iron-nickel alloy core, where the heating temperature of the heat treatment furnace was 800°C, the wire-feeding speed of the iron-nickel alloy wire rod was 2.5m/min, the treated iron-nickel alloy wire rod had a strength of 1030MPa and an elongation of 10.8%; and the mesh number of the abrasive band was 80, and the rotation coefficient of the abrasive band was 0.8.

A uniformly coated aluminum layer was formed on the surface of the iron-nickel alloy core by continuous extrusion coating technology, forming a coated wire, where the coating temperature was 450° C, the coating speed was 110 m/min, and the diameter of the coated wire was 6.55 mm.

The bimetallic synchronous drawing was performed for 8 passes on the coated wire using calcium stearate as lubricant, where the average pass compression ratio was 17.8%, the pressure gap was 0.4mm, the mold length was 125mm, and the drawing speed was 4m/s, the wire temperature was controlled at 121 °C, and finally an aluminum-coated iron-nickel alloy wire with a diameter of 3.3 mm was formed, with a total compression rate of 74.6%. The formed aluminum-coated iron-nickel alloy wire had a tensile strength of 1213 MPa, an elongation of 1.5%, and a torsion of 103 turns.

### Comparative Example 1

Invar steel wire rod with a diameter of 4.0mm experienced online polishing treatment using abrasive band and online rinsing using high-pressure water of 5MPa, to obtain an invar steel core; the core had a strength of 1320MPa and an elongation of 4%; the mesh number of the abrasive band was 120 and the rotation coefficient of the abrasive band was 0.6.

A uniformly coated aluminum layer was formed on the surface of the invar steel core by continuous extrusion coating technology, forming a coated wire, where the coating temperature was 420° C, the coating speed was 130 m/min, and the diameter of the coated wire was 4.50 mm.

The bimetallic synchronous drawing was performed for 6 passes on the coated wire by using calcium stearate as lubricant, where the pressure gap was 0.2mm, the mold length was 100mm, and the drawing speed was 5m/s, and finally an aluminum-coated invar steel wire with a diameter of 2.5 mm was formed, with a total compression rate of 69.1%. The formed aluminum-coated invar steel wire had a tensile strength of 1240MPa, an elongation of 0.4%, and a torsion of 7 turns.

Compared with Example 1, the invar steel wire rod of this comparative example had not experienced online continuous heat treatment in advance, with other steps basically the same; and compared with Example 1 in which the aluminum-coated invar steel wire had a tensile strength of 1280MPa, an elongation of 1.2% and a torsion of 95 turns, the aluminum-coated invar steel wire of this comparative example had significantly decreased elongation and torsion indexes.

### Comparative Example 2

Invar steel wire rod with a diameter of 4.0mm experienced polishing treatment using an online abrasive band and rinsing using an online high-pressure water of 5MPa to obtain an invar steel core, where the mesh number of the abrasive band was 120, and the rotation coefficient of the abrasive band was 0.6.

A uniformly coated aluminum layer was formed on the surface of the invar steel core by continuous extrusion coating technology, forming a coated wire, where the coating temperature was 420° C, the coating speed was 130 m/min, and the diameter of the coated wire was 4.50 mm.

The bimetallic synchronous drawing was performed for 6 passes on the coated wire by using calcium stearate as lubricant, where the pressure gap was 0.2mm, the mold length was 100mm, and the drawing speed was 5m/s, and finally the aluminum-coated invar steel wire with a diameter of 2.5 mm was formed, with a total compression rate of 69.1%. The aluminum-coated invar steel wire after drawing was placed in a box-type resistance furnace for heating with a heating temperature of 450°C and a heating time of 5h; and the formed aluminum-coated invar steel wire had a tensile strength of 1168MPa, an elongation of 0.8 %, and torsion of 48 turns.

Compared with Example 1, the invar steel wire rod of this comparative example had not experienced online continuous heat treatment in advance, and heat treatment, i.e., conventional annealing treatment, was carried out after drawing and forming the aluminum-coated invar steel wire, and other steps are basically the same; the so-called conventional annealing treatment refers to heating the coiled coated metal wire in a box furnace for a certain period of time for the main purpose of removing stress or increasing elongation, where the treatment temperature is usually not higher than the melting point/softening temperature of one, which has a lower melting point of the core layer and coating material; Otherwise, taking aluminum-coated invar steel wire as an example, the annealing temperature of invar steel is higher than the softening point/melting point of aluminum, too high annealing temperature will cause the coating, that is, causing aluminum to soften or even melt, or the separation of the coated aluminum from the invar steel as the core layer, these results are contrary to the original intention of removing stress or improving elongation of the material, so the subsequent annealing treatment is beneficial to improvement of elongation of the aluminum-coated invar steel wire (similar to the coated alloy wire of the present application). However, compared with this application, there is a certain gap in the improvement of the elongation of the later coating alloy wire by the pre-heat treatment of the invar wire rod. Compared with Example 1 where the aluminum-coated invar steel wire had a tensile strength of 1280MPa, an elongation of 1.2%, and a torsion of 95 turns, the finished aluminum-coated invar steel wire of this comparative example had decreased significantly tensile strength, elongation and torsion indexes.

### Comparative Example 3

4J36 iron-nickel alloy wire rod with a diameter of 4.4mm in coils was placed in a pit furnace for heat treatment, where the heating temperature was 600 °C and the heating time was 5h. After heat treatment, the iron-nickel alloy wire rod had a head tensile strength of 1020MPa, a tail tensile strength of 1070MPa, strength difference in the same circle of more than 40MPa, an elongation of 7.5%, and a carbide particle size of 8-10µm.

The iron-nickel alloy wire rod was subjected to online polishing treatment using abrasive band and online rinsing using high-pressure water of 10MPa, where the mesh number of the abrasive band was 120 and the rotation coefficient of the abrasive band was 0.7. A uniformly coated aluminum-alloy layer was formed on the surface of the iron-nickel alloy core by continuous extrusion coating technology, forming a coated wire, where the coating temperature was 430° C, the coating speed was 130 m/min, and the diameter of the coated wire was 4.95 mm.

The bimetallic synchronous drawing was performed for 6 passes on the coated wire by using sodium stearate as lubricant, where the pressure gap was 0.3mm, the mold length was 110mm, and the drawing speed was 5m/s, and finally the aluminum-alloy-coated iron-nickel alloy wire with a diameter of 2.8 mm was formed, with a total compression rate of 68.0%. The formed aluminum-alloy-coated iron-nickel alloy wire had a head tensile strength of 1090 MPa and a tail tensile strength of 1170 MPa, an elongation of 0.6% -0.8%, and a torsion of 24 turns.

Compared with Example 2, the iron-nickel alloy wire rod of this comparative example had not experienced online continuous heat treatment, but heat treatment was carried out on the whole alloy wire rod using a traditional pit furnace, and other steps are basically the same. Compared with Example 2 where the aluminum-alloy-coated iron-nickel alloy wire has a tensile strength of 1260MPa, an elongation of 1.2%, and a torsion of 87 turns, the tensile strength, elongation and torsion of the aluminum-alloy-coated iron-nickel alloy wire of this comparative example have larger fluctuations, which is due to that the whole iron-nickel alloy wire rod in the comparative example occupies a large space, and different areas (such as head, tail and middle sections) of the material placed into the pit furnace have a large temperature difference, and the fact that a certain period of time for treatment is secured, and thus the size of carbide particles in the material section of a high temperature area will be too large, and the size of the carbide particles in the material section of a low temperature area may be small; furthermore, since the cores are stacked in wire rod, the surface layer of the wire rod, which is fully in contact with the furnace cavity, will fully grow, and the carbide particles in the middle layers stacked together will be inhibited from growing. These eventually results in an overall uneven distribution of carbide particles and poor wire performance of the iron-nickel alloy, and according to FIG. 4 and FIG. 5, in the iron-nickel alloy wire rod after heat treatment in the comparative example, the microstructural carbides such as MoC, VC, Cr₃C₂ show a cluster-like distribution, and have a particle diameter in micrometer scale. In contrast, the core layer material, that is, the iron-nickel alloy, is heat-treated continuously and uniformly along the longitudinal direction thereof by the continuous online heat treatment in the present application, which improves the wire performance of the iron-nickel alloy, and controls the size growth and distribution of the carbide particles, improving the tensile strength and elongation and other properties of the final aluminum-alloy-coated iron-nickel alloy wire.

### Comparative Example 4

The preparation method and conditions of the aluminum-alloy-coated invar steel wire are the same as those in Example 1, except that the heating temperature of the heat treatment furnace was 650° C, and the wire-feeding speed was 1.0 m/min.

The obtained heat-treated invar steel alloy had a tensile strength of 920MPa, and an elongation of 4.8%; and the obtained aluminum-coated invar steel wire with the same specification had a tensile strength of 1120MPa, an elongation of 0.8%, and a torsion of 48 turns, which do not meet the expected requirements.

### Comparative Example 5

The preparation method and conditions of the aluminum-alloy-coated invar steel wire are the same as those in Example 1, except that the heating temperature of the heat treatment furnace was 840° C, and the wire-feeding speed was 5.3 m/min.

The obtained heat-treated invar steel alloy had a tensile strength of 955MPa, and an elongation of 5.5%; and the obtained aluminum-coated invar steel wire with the same specification had a tensile strength of 1150MPa, an elongation of 0.8%, and a torsion of 56 turns, which do not meet the expected requirements.

In other examples, the parameters of the present application are not limited to the above examples, but can be adjusted within the reasonable range mentioned to obtain the coated alloy wire with excellent comprehensive properties such as strength, elongation and torsion, which will not be repeated here.

To sum up, the preparation method of the coated alloy wire proposed in the present application is implemented through a series of processes of the alloy wire rod, including continuous heat treatment in advance, online surface polishing or grinding and rinsing, continuous coating and extrusion, and bimetallic synchronous drawing. By optimizing and controlling the necessary process parameters in each process, the final product has enhanced mechanical properties such as tensile strength and elongation, that is, it is possible to increase the tensile strength and elongation of the coated alloy wire, reduce the size of the carbide particles and make the carbide particles distributed diffusively, improve wire performance, reduce wire breakage, allow continuous operation of the process, and improves the production efficiency. In addition, the high-strength and high-elongation coated alloy wire produced by the present application is concentrically twisted with the aluminum alloy, which can reduce the sag of the conductor, increase the pull-weight ratio, improve the capacity of the transmission line, and meet the high requirements for the use of power system capacity upgrades.

The above examples are only used to illustrate the technical solutions of the examples of the present application rather than limit them; although the examples of the present application have been described in detail with reference to the above preferred examples, those skilled in the art should understand that modifications of the technical solutions of the examples of the present application should not depart from the scope of the invention defined by the appended claims.

## Claims

1. A preparation method of a coated alloy wire, comprising the following steps:
S1: performing continuous heat treatment on an alloy wire rod, and then performing surface treatment to obtain an alloy core;
S2: continuously extruding a coating metal layer onto a surface of the alloy core to form a coated wire;
S3: performing bimetallic synchronous drawing on the coated wire to prepare the coated alloy wire;
wherein in the step S1, the continuous heat treatment has a heating temperature of 680-820°C and a wire-feeding speed of 1.5-5m/min, the alloy wire rod is continuously fed into a heating furnace device, and the alloy wire rod comprises invar steel wire rod or iron-nickel alloy wire rod;
wherein in the step S1, the continuous heat treatment is controlled so that the alloy wire rod after the continuous heat treatment has one or more of the following properties: tensile strength ≥ 1000MPa, elongation ≥ 10%, carbide size ≤ 6 µm, and wire tensile strength difference ≤20MPa.

2. The preparation method of a coated alloy wire according to claim 1, wherein in the step S1, the continuous heat treatment is performed using a natural gas continuous heat treatment furnace, and the alloy wire rod is in a protective atmosphere of an inert gas during heating process.

3. The preparation method of a coated alloy wire according to claim 1, wherein in the step S1, the surface treatment comprises polishing or grinding the continuously heat-treated alloy wire rod.

4. The preparation method of a coated alloy wire according to claim 3, wherein the polishing is online polishing using an abrasive band.

5. The preparation method of coated alloy wire according to claim 3, wherein the grinding is louvered wheel grinding.

6. The preparation method of a coated alloy wire according to claim 1, wherein the step S1 further comprises rinsing the alloy wire rod after surface treatment.

7. The preparation method of a coated alloy wire according to claim 6, wherein the rinsing is performed using adjustable high-pressure water;
a pressure of water is 5-20 MPa.

8. The preparation method of a coated alloy wire according to claim 1, wherein before the step S2, the preparation method further comprises performing a preheat treatment on the alloy core.

9. The preparation method of a coated alloy wire according to claim 8, wherein an induction heating device is used to perform the preheat treatment.

10. The preparation method of a coated alloy wire according to claim 1, wherein in the step S2, a material of the metal layer comprises aluminum or an aluminum alloy.

11. The preparation method of a coated alloy wire according to claim 1 or 10, wherein in the step S2, a pulling speed of the alloy core is 80-140 m/min;
a coating temperature of a mold cavity is 400-550°C.

12. The preparation method of a coated alloy wire according to claim 1, wherein in the step S3, a pressure gap is 0.1-0.5 mm and a length of a pressure mold is 60-140 mm during the drawing;
a taper angle of a wire drawing mold is 5-9°;
an average pass compression ratio is controlled at 14%-21%, and a drawing speed is 3-6m /s, and a wire temperature is controlled within 130°C, and the drawing is performed for 5-10 passes.

13. The preparation method of a coated alloy wire according to claim 1, wherein in the step S3, the drawing process is performed using a solid lubricant or a liquid lubricant;
the solid lubricant comprises one or more of calcium stearate, sodium stearate and barium stearate, and the liquid lubricant comprises mineral oil and/or vegetable oil.

## Patentansprüche

1. Verfahren zur Herstellung eines beschichteten Legierungsdrahtes, umfassend die folgenden Schritte:
S1: Durchführen einer kontinuierlichen Wärmebehandlung an einem Legierungswalzdraht und anschließend Durchführen einer Oberflächenbehandlung, um einen Legierungskern zu erhalten;
S2: kontinuierliches Extrudieren einer Metallbeschichtungsschicht auf eine Oberfläche des Legierungskerns, um einen beschichteten Draht zu bilden;
S3: Durchführen von bimetallischem synchronem Ziehen auf dem beschichteten Draht, um den beschichteten Legierungsdraht herzustellen;
wobei im Schritt S1, die kontinuierliche Wärmebehandlung eine Heiztemperatur von 680-820 °C und eine Drahtzufuhrgeschwindigkeit von 1,5-5 m/min aufweist, der Legierungswalzdraht kontinuierlich in eine Heizofenvorrichtung zugeführt wird und der Legierungswalzdraht Invarstahlwalzdraht oder Eisen-Nickel-Legierungswalzdraht umfasst;
wobei im Schritt S1, die kontinuierliche Wärmebehandlung so gesteuert wird, dass der Legierungswalzdraht nach der kontinuierlichen Wärmebehandlung eine oder mehrere der folgenden Eigenschaften aufweist: Zugfestigkeit ≥ 1000 MPa, Dehnung ≥ 10%, Carbidgröße ≤ 6 µm, und Drahtzugfestigkeitsdifferenz ≤ 20 MPa.

2. Verfahren zur Herstellung eines beschichteten Legierungsdrahtes nach Anspruch 1, wobei im Schritt S1, die kontinuierliche Wärmebehandlung unter Verwendung eines kontinuierlichen Erdgas-Wärmebehandlungsofens durchgeführt wird und der Legierungswalzdraht sich während des Heizprozesses unter einer schützenden Atmosphäre eines Inertgases befindet.

3. Verfahren zur Herstellung eines beschichteten Legierungsdrahtes nach Anspruch 1, wobei im Schritt S1, die Oberflächenbehandlung Polieren oder Schleifen des kontinuierlich wärmebehandelten Legierungswalzdrahtes umfasst.

4. Verfahren zur Herstellung eines beschichteten Legierungsdrahtes nach Anspruch 3, wobei das Polieren Online-Polieren mit einem Schleifmittel ist.

5. Verfahren zur Herstellung von beschichtetem Legierungsdraht nach Anspruch 3, wobei das Schleifen ein Rasterscheibenschleifen ist.

6. Verfahren zur Herstellung eines beschichteten Legierungsdrahtes nach Anspruch 1, wobei der Schritt S1 ferner Spülen des Legierungswalzdrahtes nach der Oberflächenbehandlung umfasst.

7. Verfahren zur Herstellung eines beschichteten Legierungsdrahtes nach Anspruch 6, wobei das Spülen unter Verwendung von einstellbarem Hochdruckwasser durchgeführt wird;
ein Wasserdruck weist 5-20 MPa auf.

8. Verfahren zur Herstellung eines beschichteten Legierungsdrahtes nach Anspruch 1, wobei das Verfahren zur Herstellung vor dem Schritt S2 ferner Durchführen einer Vorwärmbehandlung des Legierungskerns umfasst.

9. Verfahren zur Herstellung eines beschichteten Legierungsdrahtes nach Anspruch 8, wobei eine Induktionsheizvorrichtung zur Durchführung der Vorwärmbehandlung verwendet wird.

10. Verfahren zur Herstellung eines beschichteten Legierungsdrahtes nach Anspruch 1, wobei im Schritt S2, ein Material der Metallschicht Aluminium oder eine Aluminiumlegierung umfasst.

11. Verfahren zur Herstellung eines beschichteten Legierungsdrahtes nach Anspruch 1 oder 10, wobei im Schritt S2, eine Ziehgeschwindigkeit des Legierungskerns 80-140 m/min beträgt;
eine Beschichtungstemperatur eines Formhohlraums 400-550 °C beträgt.

12. Verfahren zur Herstellung eines beschichteten Legierungsdrahtes nach Anspruch 1, wobei im Schritt S3, ein Druckspalt 0,1-0,5 mm aufweist und eine Länge einer Druckform während des Ziehens 60-140 mm aufweist; ein Konuswinkel einer Drahtziehform 5-9° beträgt;
ein durchschnittliches Durchgangs-Verdichtungsverhältnis bei 14%-21% geregelt wird und eine Ziehgeschwindigkeit 3-6 m/s beträgt, und eine Temperatur des Drahtes innerhalb von 130 °C geregelt wird, und das Ziehen für 5-10 Durchgänge durchgeführt wird.

13. Verfahren zur Herstellung eines beschichteten Legierungsdrahtes nach Anspruch 1, wobei im Schritt S3, der Ziehvorgang unter Verwendung eines festen Schmiermittels oder flüssigen Schmiermittels durchgeführt wird; das feste Schmiermittel eines oder mehrere von Calciumstearat, Natriumstearat und Bariumstearat umfasst, und das flüssige Schmiermittel Mineralöl und/oder Pflanzenöl umfasst.

## Revendications

1. Procédé de préparation d'un fil en alliage revêtu, comprenant les étapes suivantes consistant à :
S1 : réaliser un traitement thermique continu sur un fil machine en alliage, et ensuite réaliser un traitement de surface pour obtenir un noyau en alliage ;
S2 : extruder en continu une couche de métal de revêtement sur une surface du noyau en alliage pour former un fil revêtu ;
S3 : réaliser un étirage bimétallique synchrone sur le fil revêtu pour préparer le fil en alliage revêtu ;
dans lequel, dans l'étape S1, le traitement thermique continu a une température de chauffage allant de 680 à 820°C et une vitesse d'acheminement de fil allant de 1,5 à 5 m/min, le fil machine en alliage est acheminé en continu dans un dispositif de four de chauffage, et le fil machine en alliage comprend un fil machine en acier invar ou un fil machine en alliage fer-nickel ;
dans lequel, dans l'étape S1, le traitement thermique continu est contrôlé de sorte que le fil machine en alliage après le traitement thermique continu ait une ou plusieurs des propriétés suivantes : la résistance à la traction ≥ 1000 MPa, l'allongement ≥ 10%, la taille de carbure ≤ 6 µm et la différence de résistance à la traction du fil ≤ 20MPa.

2. Procédé de préparation d'un fil en alliage revêtu selon la revendication 1, dans lequel, dans l'étape S1, le traitement thermique continu est réalisé en utilisant un four de traitement thermique continu au gaz naturel, et le fil machine en alliage est dans une atmosphère protectrice d'un gaz inerte pendant le procédé de chauffage.

3. Procédé de préparation d'un fil en alliage revêtu selon la revendication 1, dans lequel, dans l'étape S1, le traitement de surface comprend le polissage ou le meulage du fil machine en alliage traité thermiquement en continu.

4. Procédé de préparation d'un fil en alliage revêtu selon la revendication 3, dans lequel le polissage est un polissage en ligne utilisant une bande abrasive.

5. Procédé de préparation de fil en alliage revêtu selon la revendication 3, dans lequel le meulage est un meulage au disque à lames.

6. Procédé de préparation d'un fil en alliage revêtu selon la revendication 1, dans lequel l'étape S1 comprend en outre un rinçage du fil machine en alliage après le traitement de surface.

7. Procédé de préparation d'un fil en alliage revêtu selon la revendication 6, dans lequel le rinçage est réalisé en utilisant de l'eau à haute pression réglable ;
une pression d'eau est de 5 à 20 MPa.

8. Procédé de préparation d'un fil en alliage revêtu selon la revendication 1, dans lequel, avant l'étape S2, le procédé de préparation comprend en outre l'étape consistant à réaliser un traitement de préchauffage sur le noyau en alliage.

9. Procédé de préparation d'un fil en alliage revêtu selon la revendication 8, dans lequel un dispositif de chauffage par induction est utilisé pour réaliser le traitement de préchauffage.

10. Procédé de préparation d'un fil en alliage revêtu selon la revendication 1, dans lequel, dans l'étape S2, un matériau de la couche métallique comprend de l'aluminium ou un alliage d'aluminium.

11. Procédé de préparation d'un fil en alliage revêtu selon la revendication 1 ou 10, dans lequel, dans l'étape S2, une vitesse de traction du noyau en alliage est de 80 à 140 m/min ;
une température de revêtement d'une cavité de moule est de 400 à 550°C.

12. Procédé de préparation d'un fil en alliage revêtu selon la revendication 1, dans lequel, dans l'étape S3, un espace de pression est de 0,1 à 0,5 mm et une longueur d'un moule sous pression est de 60 à 140 mm pendant l'étirage ;
un angle de conicité d'un moule de tréfilage est de 5 à 9° ;
un taux de compression de passage moyen est régulé à 14%-21%, et une vitesse d'étirage est de 3 à 6 m/s, et une température de fil est régulée à 130°C, et l'étirage est réalisé pendant 5 à 10 passages.

13. Procédé de préparation d'un fil en alliage revêtu selon la revendication 1, dans lequel, dans l'étape S3, le procédé d'étirage est réalisé en utilisant un lubrifiant solide ou un lubrifiant liquide ;
le lubrifiant solide comprend un ou plusieurs parmi le stéarate de calcium, le stéarate de sodium et le stéarate de baryum, et le lubrifiant liquide comprend une huile minérale et/ou une huile végétale.
